# EUROPEAN PATENT APPLICATION

(11) **EP 4 697 768 A1**
(43) Date of publication of application: **18.02.2026**
(21) Application number: 23944603.2
(22) Date of filing: 10.07.2023
(51) Int. Cl.: H04W 8/24

(54) **RELAY COMMUNICATION METHODS AND TERMINALS**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN)
(74) Representative: Wu, Ting
(86) International application number: PCT/CN2023/106516
(87) International publication number: WO 2025/010580

(57) **Abstract**

The present application relates to relay communication methods and terminals. A method comprises: a first terminal sends first information, the first information being used for indicating relay state information. In the embodiments of the present application, in relay scenarios, a suitable relay can be selected for the terminal on the basis of the relay state information indicated by the first information, thereby improving the communication quality.

## Description

### TECHNICAL FIELD

The present disclosure relate to the communication field, and in particular to a method for relay communication and a terminal.

### BACKGROUND

With the development of wireless communication technology, relay has been introduced into a 3rd Generation Partnership Project (3GPP). A remote terminal may be connected to a network through a relay terminal. A source terminal may also be connected to a target terminal through the relay terminal. By performing communication based on the relay terminal, a communication distance can be extended and communication reliability can be improved.

### SUMMARY

Embodiments of the present disclosure provide a method for relay communication and a terminal, which avoids a signaling interaction flow in which traditional User Equipment (UE) that only supports a single-hop relay is connected to a multi-hop relay.

The embodiments of the present disclosure provide a method for relay communication, which includes the following operation.

The first terminal sends first information. The first information is used to indicate relay state information.

The embodiments of the present disclosure provide a method for relay communication, which includes the following operation.

The second terminal receives first information. The first information is used to indicate relay state information.

The embodiments of the present disclosure provide a first terminal, which includes a first sending unit.

The first sending unit is configured to send first information. The first information is used to indicate relay state information.

The embodiments of the present disclosure provide a second terminal, which includes a first receiving unit.

The first receiving unit is configured to receive first information. The first information is used to indicate relay state information.

The embodiments of the present disclosure provide a terminal device, including a processor and a memory. The memory is configured to store a computer program, and the processor is configured to call and run the computer program stored in the memory to cause the terminal device to implement the above method for relay communication.

The embodiments of the present disclosure provide a chip, which is configured to implement the above method for relay communication. Specifically, the chip includes a processor, which is configured to call and run a computer program from a memory, to cause a device equipped with the chip to implement the above method for relay communication.

The embodiments of the present disclosure provide a computer-readable storage medium, having stored thereon a computer program that, when running on a device, causes the device to implement the above method for relay communication.

The embodiments of the present disclosure provide a computer program product, including computer program instructions, where the computer program instructions cause a computer to implement the above method for relay communication.

The embodiments of the present disclosure provide a computer program that, when running on a computer, causes the computer to implement the above method for relay communication.

In the embodiments of the present disclosure, according to the method for relay communication, an appropriate relay can be selected for a terminal based on the relay state information indicated by the first information in a relay scenario, and the communication quality can be improved.

### BRIEF DESCRIPTION OF THE DRAWINGS

FIG. 1 is a schematic diagram of an application scenario according to an embodiment of the present disclosure.
FIG. 2A is a schematic diagram of transmission mode A in 3GPP.
FIG. 2B is a schematic diagram of transmission mode B in 3GPP.
FIG. 3 is a schematic flowchart of a method for relay communication according to an embodiment of the present disclosure.
FIG. 4 is a schematic flowchart of a method for relay communication according to another embodiment of the present disclosure.
FIG. 5 is a schematic flowchart of a method for relay communication according to another embodiment of the present disclosure.
FIG. 6 is a schematic flowchart of a method for relay communication according to another embodiment of the present disclosure.
FIG. 7 is a schematic flowchart of a method for relay communication according to another embodiment of the present disclosure.
FIG. 8 is a schematic flowchart of a method for relay communication according to an embodiment of the present disclosure.
FIG. 9 is a schematic flowchart of a method for relay communication according to another embodiment of the present disclosure.
FIG. 10 is a schematic flowchart of a method for relay communication according to another embodiment of the present disclosure.
FIG. 11 is a schematic flowchart of a method for relay communication according to another embodiment of the present disclosure.
FIG. 12 is a schematic flowchart of a method for relay communication according to another embodiment of the present disclosure.
FIG. 13A is a schematic flowchart of a network-to-terminal relay according to example 1 of the present disclosure.
FIG. 13B is a schematic flowchart of a terminal-to-terminal relay according to example 1 of the present disclosure.
FIG. 14A is a schematic flowchart of a network-to-terminal relay according to example 2 of the present disclosure.
FIG. 14B is a schematic flowchart of a terminal-to-terminal relay according to example 2 of the present disclosure.
FIG. 15A is a schematic flowchart of a network-to-terminal relay according to example 3 of the present disclosure.
FIG. 15B is a schematic flowchart of a terminal-to-terminal relay according to example 3 of the present disclosure.
FIG. 16 is a schematic block diagram of a first terminal according to an embodiment of the present disclosure.
FIG. 17 is a schematic block diagram of a first terminal according to another embodiment of the present disclosure.
FIG. 18 is a schematic block diagram of a second terminal according to an embodiment of the present disclosure.
FIG. 19 is a schematic block diagram of a second terminal according to another embodiment of the present disclosure.
FIG. 20 is a schematic structural diagram of a communication device according to an embodiment of the present disclosure.
FIG. 21 is a schematic structural diagram of a chip according to an embodiment of the present disclosure.
FIG. 22 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure.

The technical solution of the embodiments of the present disclosure may be applied to various communication systems. For example, a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U) system, a Non-Terrestrial Networks (NTN) system, a Universal Mobile Telecommunication System (UMTS), a Wireless Local Area Networks (WLAN), a Wireless Fidelity (WiFi), a 5th-Generation communication system or other communication systems.

Generally speaking, conventional communication systems support a limited number of connections and are easy to implement. However, with the development of communication technology, mobile communication systems will not only support conventional communication, but also support, for example, Device to Device (D2D) communication, Machine to Machine (M2M) communication, Machine Type Communication (MTC), Vehicle to Vehicle (V2V) communication, Vehicle to everything (V2X), etc. Embodiments of the present disclosure may also be applied to these communication systems.

In an implementation, the communication system in the embodiments of the present disclosure may be applied to a Carrier Aggregation (CA) scenario, a Dual Connectivity (DC) scenario, and a Standalone (SA) network distribution scenario.

In an implementation, the communication system in the embodiments of the present disclosure may be applied to an unlicensed spectrum, where the unlicensed spectrum may also be considered a shared spectrum. Optionally, the communication system in the embodiments of the present disclosure may also be applied to a licensed spectrum, where the licensed spectrum may also be considered as a non-shared spectrum.

Embodiments of the present disclosure are described in connection with a network device and a terminal device. The terminal device may be referred to as User Equipment (UE), an access terminal, a subscriber unit, a subscriber station, a mobile station, a mobile platform, a remote station, a remote terminal (or a distant terminal), a mobile device, a user terminal, a terminal, a wireless communication device, a user agent, or a user device.

The terminal device may be a station (ST) in the WLAN, or it may be a cellular phone, a cordless phone, a session initiation protocol (SIP) telephone, a wireless local loop (WLL) station, a personal digital assistant (PDA) device, a handheld device with wireless communication function, a computing device or other processing devices connected to wireless modem, an in-vehicle device, a wearable device, a next-generation communication system such as a terminal device in an NR network, or a terminal device in the future evolved public land mobile network (PLMN) network, etc.

In the embodiments of the present disclosure, the terminal device may be deployed on land, including indoor or outdoor, hand-held, wearable or in-vehicle. The terminal device may also be deployed on water (such as ships, etc.). The terminal device may also be deployed on the air (such as airplanes, balloons and satellites, etc.).

In the embodiments of the present disclosure, the terminal device may be a Mobile Phone, a Pad, a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or smart home, etc.

By way of example and not limitation, in the embodiments of the present disclosure, the terminal device may also be a wearable device. The wearable device may also be called a wearable intelligent device, which is a general name of wearable devices developed by applying wearable technology to intelligently design daily wear, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices have full functions and large size, which may realize all or partial functions without relying on smart phones, such as smart watches or smart glasses, and only focus on certain application functions, and the wearable smart devices need to be used in conjunction with other devices such as smart phones, such as various smart bracelets and smart jewelry for monitoring physical signs.

In the embodiments of the present disclosure, the network device may be a device for communicating with a mobile device, and the network device may be an Access Point (AP) in WLAN, a Base Transceiver Station (BTS) in GSM or CDMA, a base station (NodeB, NB) in WCDMA, an Evolutional Node B (eNB or eNodeB) in LTE, a relay station or an access point, or an in-vehicle device, a wearable device, a network device in NR network (gNB), a network device in future evolved PLMN network or a network device in NTN network, etc.

By way of example and not limitation, in the embodiments of the present disclosure, the network device may have mobility characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station arranged on land, water and the like.

In the embodiments of the present disclosure, the network device may provide services for a cell, and the terminal device communicates with the network device through transmission resources (e.g. frequency domain resources, or spectrum resources) used by the cell. The cell may be a cell corresponding to a network device (e.g. a base station), the cell may belong to a macro base station or a base station corresponding to a small cell. The small cell may include a Metro cell, a Micro cell, a Pico cell, a Femto cell, etc. These small cells have the characteristics of small coverage and low transmission power, and are suitable for providing high-speed data transmission services.

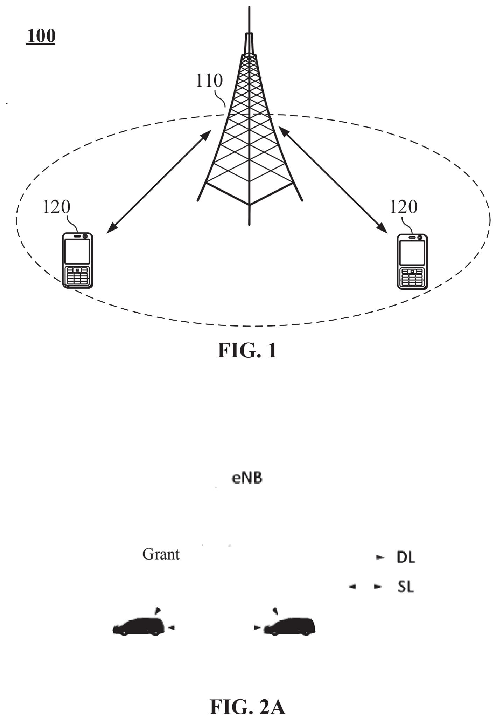

FIG. 1 exemplarily illustrates a communication system 100. The communication system includes a network device 110 and two terminal devices 120. In an implementation, the communication system 100 may include multiple network devices 110 and other numbers of terminal devices 120 may be included within the coverage of each network device 110, which is not limited by the embodiments of the present disclosure.

In an implementation, the communication system 100 may also include other network entities such as a Mobility Management Entity (MME), an Access and Mobility Management Function (AMF), etc, which is not limited by the embodiments of the present disclosure.

The network device may also include an access network device and a core network device. That is, the wireless communication system also includes a plurality of core networks for communicating with the access network device. The access network device may be an evolutionary node B (eNB or e-NodeB), macro base station, a micro base station (also referred to as a "small base station"), a pico base station, an access point (AP), a transmission point (TP) or a new generation Node B (gNodeB) in a long-term evolution (LTE) system, a next radio (mobile communication system) (NR) system or an authorized auxiliary access long-term evolution (LAA) system.

It is to be understood that a device having a communication function in a network/system in the embodiments of the present disclosure may be referred to as a communication device. Taking the communication system illustrated in FIG. 1 as an example, the communication device may include a network device and a terminal device having a communication function, the network device and the terminal device may be specific devices described in the embodiments of the present disclosure and will not be described here. The communication device may also include other devices in the communication system such as network controllers, mobility management entities and other network entities, which are not limited by the embodiments of the present disclosure.

It is to be understood that the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects.

It is to be understood that the reference to "indicate" in the embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B.

In the description of the embodiments of the present disclosure, the term "correspond" may mean that there is a direct correspondence or an indirect correspondence relationship between the two, may also mean that there is an association relationship between the two, may also be a relationship between indication and being indicated, configuration and being configured, etc.

In order to facilitate understanding of the technical solution of the embodiments of the present disclosure, related technologies of the embodiments of the present disclosure are described as follows. The following related technologies can be arbitrarily combined with the technical solution of the embodiments of the present disclosure as optional solutions, all of which belong to the protection scope of the embodiments of the present disclosure.
1. Long Term Evolution (LTE) Device to Device (D2D)/Vehicle to X (V2X)

D2D communication is a Sidelink (SL) transmission technology based on D2D. Different from a traditional cellular system in which communication data is received or sent through the base station, Sidelink communication systems such as V2X system adopt a manner of direct communication of terminal to terminal, thus having higher spectrum efficiency and lower transmission delay.

Two transmission modes are included in 3GPP: mode A and mode B.

Mode A: as illustrated in FIG. 2A, transmission resources for the terminal are allocated by the base station, and the terminal sends data on the sidelink according to the resources allocated by the base station. The base station may allocate a single transmission resource to the terminal or may allocate a semi-persistent transmission resource to the terminal.

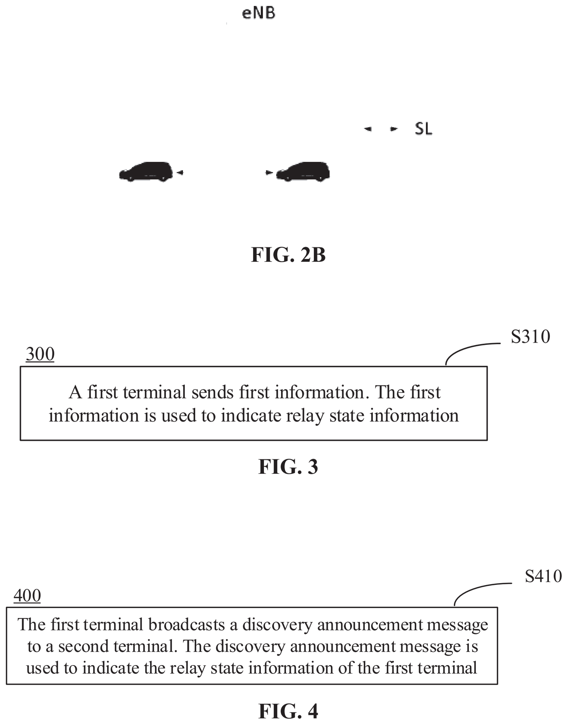

Mode B: as illustrated in FIG. 2B, an in-vehicle terminal selects a resource from a resource pool to transmit data.

In 3GPP, D2D includes different stages.
(1) Proximity-based Service (ProSe): In Rel-12/13, D2D communication is studied for ProSe scenario, which mainly focuses on services for public security.
   In ProSe, by configuring the position of the resource pool in the time domain, for example, the resource pool is discontinuous in the time domain, the UE can discontinuously send/receive data on the sidelink, thereby achieving the effect of power saving.
(2) Vehicle to X (V2X): In Rel-14/15, the V2X system is studied for a scenario of vehicle-to-vehicle communication, which is mainly oriented to a service of vehicle-to-vehicle and vehicle-person communication with relatively high-speed mobility.
   In V2X, since an in-vehicle system has continuous power supply, power efficiency is not a primary concern, whereas data transmission delay is. Therefore, the system design requires the terminal device to send and receive continuously.
(3) Wearable device, and Further Enhancement to Device-to-Device (FeD2D): In Rel-14, a scenario of wearable device accessing the network through mobile phones is studied in this subject, which is mainly oriented to low mobile speed and low power access scenarios.

In FeD2D, in a pre-research stage, 3GPP concluded that the base station can configure Discontinuous Reception (DRX) parameters of the remote terminal through a relay terminal. However, since this subject did not progress further into a standardization phase, no conclusions were reached on the specific details of how to perform DRX configuration.

Multi-carrier: In Rel-15 LTE V2X, a multi-carrier mechanism was introduced. Specifically, the multi-carrier mechanism is reflected in the ability of UE to support: data packet segmentation, where data packets are transmitted using multiple carriers to enhance data transmission rates; data packet duplication, where two copies of an identical data packet is duplicated and sent using two carriers to improve transmission reliability; and multi-carrier reception enhancement at the receiving end. Specifically, regarding data packet duplication: V2X sidelink communication supports sidelink packet duplication, which is performed at a Packet Data Convergence Protocol (PDCP) layer of the UE. For sidelink packet duplication for transmission, PDCP Protocol Data Unit (PDU) is duplicated at a PDCP entity. Duplicated Packet Data Protocol (PDP) PDUs from the same PDCP entity are submitted to two different Radio Link Control (RLC) entities and associated with two different sidelink logical channels, respectively. The duplicated PDP PDUs from the same PDCP entity are only allowed to be transmitted on different sidelink carriers. UE can activate or deactivate sidelink packet duplication based on (pre-)configuration. Sidelink data packet duplication is not applicable to transmissions with Rel-14 transmission profile (TS 23.285[72]). A Prose Per-Packet Reliability (PPPR) value supporting sidelink data packet duplication can be (pre-)configured through a PPPR threshold. For UE-autonomous resource selection and scheduled resource allocation, the UE should perform sidelink packet duplication for data with configured PPPR values until packet duplication configuration is cancelled for these PPPR values. For scheduled resource allocation, UE reports the data volume associated with one or more PPPR values and a destination to which the data belongs through a sidelink Buffer Status Report (BSR). The mapping of PPPR values to logical channel groups can be configured by the eNB, and PPPR values are reflected by the associated logical channel group identity (ID) included in the sidelink BSR. A list of one or more PPPR values may be reported by an RRC-connected UE in sidelink UE information.

### 2. NR V2X

On the basis of LTE V2X, NR V2X is not limited to broadcast scenarios, but further expands to unicast and multicast scenarios, and studies the application of V2X in these scenarios.

Similar to LTE V2X, NR V2X also includes two resource grant modes: mode-1 and mode-2. Furthermore, users may operate in a hybrid mode, where they can acquire resources using both mode-1 and mode-2 simultaneously. The resource acquisition is indicated by a sidelink grant, that is, the sidelink grant indicates time-frequency positions of corresponding PSCCH and PSSCH resources.

Different from LTE V2X, in addition to feedback-free, UE-initiated Hybrid Automatic Repeat-reQuest (HARQ) retransmission, NR V2X introduces feedback-based HARQ retransmission, applicable not only to unicast communications but also to multicast communications.

Similar to LTE V2X, in NR V2X, since an in-vehicle system has continuous power supply, power efficiency is not the primary concern, whereas data transmission delay is. Therefore, the system design requires the terminal device to send and receive data continuously.

For example, a sidelink terminal triggers a sidelink RRC reconfiguration procedure in the following scenarios:
releasing a sidelink data bearer in unicast communication;
establishing the sidelink data bearer in the unicast communication;
modifying a related configuration of the sidelink data bearer in the unicast communication;
releasing a PC5 relay RLC channel between a layer-2 relay terminal and a remote terminal in a terminal-to-network relay scenario;
establishing the PC5 relay RLC channel between the layer-2 relay terminal and the remote terminal in the terminal-to-network relay scenario;
modifying a related configuration of the PC5 relay RLC channel between the layer 2 relay terminal and the remote terminal in the terminal-to-network relay scenario;
reconfiguring parameters related to NR sidelink measurement reporting;
reconfiguring sidelink CSI reference signal resources and CSI reporting delay boundaries;
reconfiguring sidelink DRX for a peer terminal.

### 3. Terminal-to-network relay

The remote terminal performs measurement reporting, where measurement reporting information includes a relay terminal identity, a serving cell identity, and Reference Signal Received Power (RSRP) measurement results, etc. When the remote terminal performs a link handover from an indirect path to a direct path, for the serving relay terminal, SL-RSRP can be used for sidelink measurements. When the remote terminal performs a link handover from the direct path to the indirect path, SD-RSRP can be used for sidelink measurements. In addition, when measurement reporting is performed, two new measurement reporting trigger events are defined for terminal-to-network relay handover. Event 1: When a link quality of the serving relay terminal falls below a configured threshold, and optionally, the link quality of a neighboring cell rises above the configured threshold, the remote terminal performs measurement reporting. Event 2: When the serving cell link quality falls below the configured threshold, and optionally, the relay terminal link quality rises above the configured threshold, the remote terminal performs measurement reporting. In addition, in order to assist the remote terminal in performing a handover from the direct link to the indirect link, a new timer is introduced. When the remote terminal has received an RRC reconfiguration message indicating a handover from the direct link to the indirect link, the remote terminal starts the timer. When the timer expires, the remote terminal performs RRC re-establishment.

In UE-to-network relay, the network side configures a bearer ID for the remote terminal and the relay terminal for end-to-end data transmission of the relay terminal. Additionally, the network side also configures bearer parameters on a PC5 interface between the relay terminal and the remote terminal. In a configuration of a Sidelink Relay Adaptation Protocol (SRAP) layer, the network will map a bearer ID with a PC5 RLC channel ID, and the relay terminal can learn specific configuration information used by the remote terminal through the RLC channel ID. However, the relay terminal cannot know specific information of Quality of Service (QoS) for corresponding services transmitted by the remote terminal using the configuration information.

In the embodiments of the present disclosure, the backward compatibility problem after introducing multi-hop relay can be resolved, preventing remote users that only support single-hop relay from accessing a multi-hop relay network.

FIG. 3 is a schematic flowchart of a method for relay communication according to an embodiment of the present disclosure. Optionally, the method 300 may be applied to the system illustrated in FIG. 1, but is not limited thereto. The method includes at least some of the following.

At S310, a first terminal sends first information. The first information is used to indicate relay state information. In an embodiment of the present disclosure, the first terminal may send the first information to a second terminal. For example, the first terminal is a relay terminal, and the second terminal is a remote terminal, a source terminal, or a target terminal. The first information may indicate relay state information of the first terminal. The relay state information may include relay capability information, for example, whether the first terminal supports relay, a type of relay currently in operation, the specific number of relay hops, and the like. An appropriate relay can be selected for a terminal based on the relay state information indicated by the first information in a relay scenario, and the communication quality can be improved. For example, remote users or targets that only support single-hop relay can be preventing from accessing multi-hop relay networks, unnecessary network access operations can be reduced, and the overall communication quality of the communication network can be improved.

In an implementation, the second terminal is a remote terminal or a target terminal.

In an implementation, the first terminal is a relay terminal.

In an implementation, the relay state information is used to indicate at least one of the following:
operating in a single-hop relay state;
operating in a multi-hop relay state; or
a current hop number in operation.

For example, the first information may indicate a type of relay in which the relay terminal is currently operating, such as operating in a single-hop relay state or operating in a multi-hop relay state. The first information may also indicate a hop number at which the relay terminal is currently operating, for example, the hop number of 1 indicates that the relay is operating in the single-hop relay state, and the hop number of 3 indicates that the relay is operating in the multi-hop relay state and is at a third hop currently.

In an implementation, the first information is carried in a first message. In an embodiment of the present disclosure, the first terminal may send the first message to the second terminal, the first information is carried through the first message, and the relay state information of the first terminal is indicated explicitly or implicitly.

In an implementation, the first information is indicated by one or more indication bits in the first message. In an embodiment of the present disclosure, the relay state information of the first terminal may be explicitly indicated by an indication bit in the first message. For example, a value of the indication bit in the first message being 1 may indicate that the first terminal is operating in the single-hop relay state. If the value of the indication bit in the first message is 0, it may indicate that the first terminal is operating in the multi-hop relay state. Or, if the value of the indication bit in the first message is 11, it may indicate that the first terminal is operating in the multi-hop relay state and is at the third hop.

In an implementation, the first information is at least one of the following in the first message:
Layer-2 identifier (Layer-2 ID);
Relay Service Code (RSC), or relay business code;
service identifier; or
a physical layer parameter.

In an embodiment of the present disclosure, the relay state information of the first terminal may be implicitly indicated by other identifiers, codes, or parameters in the first message.

For example, if the Layer-2 ID in the first message is an odd number, it indicates that the relay state information indicates operating in the single-hop relay state, and if it is an even number, it indicates that the relay state information indicates operating in the multi-hop relay state. For another example, if the Layer-2 ID in the first message is an odd number, it indicates that the relay state information indicates operating in the multi-hop relay state, and if it is an even number, it indicates that the relay state information indicates operating in the single-hop relay state.

Furthermore, the RSC or service ID may be divided into several numerical ranges. If the RSC or service ID in the first message falls within a first numerical range, it indicates that the relay state information indicates operating in the single-hop relay mode; if it falls within a second numerical range, it indicates that the relay state information indicates operating in the multi-hop relay state.

In an implementation, the physical layer parameter includes at least one of a relay service reference signal sequence or a reference signal cyclic shift. For example, a correspondence between physical layer parameters and the relay state information may be set. For example, among 128 reference signal sequences, the first 64 reference signal sequences correspond to the single-hop, and the last 64 reference signal sequences correspond to the multi-hop. For another example, among the 128 reference signal sequences, the first 32 reference signal sequences correspond to the single-hop, the next 32 reference signal sequences correspond to 2-hop, the following 32 reference signal sequences correspond to 3-hop, and the last 32 reference signal sequences correspond to 4-hop. For yet another example, an odd number of bits in the reference signal cyclic shift corresponds to the single-hop, while an even number in the reference signal cyclic shift corresponds to the multi-hop.

FIG. 4 is a schematic flowchart of a method for relay communication 400 according to another embodiment of the present disclosure. The method may include one or more of the features of the method described above. In an implementation, the first message includes a discovery message.

In an implementation, the discovery message includes a discovery announcement message, and in the S310, the operation that the first terminal sends the first information includes S410.

In S410, the first terminal broadcasts the discovery announcement message to the second terminal. The discovery announcement message is used to indicate the relay state information of the first terminal. For example, the first terminal, such as the relay terminal, indicates the relay state information of the relay terminal by broadcasting the discovery announcement message. The second terminal receiving the discovery announcement message, such as the remote terminal or the target terminal, may determine whether to access through the relay terminal.

For example, if the relay state information of the relay terminal indicates operating in the multi-hop relay state, and the remote terminal or the target terminal only supports operating in the single-hop relay state, the remote terminal or the target terminal does not access through the relay terminal. If the relay state information of the relay terminal indicates operating in the multi-hop relay state, and the remote terminal or the target terminal supports operating in the multi-hop relay state, the remote terminal or the target terminal may access through the relay terminal.

For another example, if the relay state information of the relay terminal indicates operating in the single-hop relay state, and the remote terminal or the target terminal only supports operating in the single-hop relay state, the remote terminal or the target terminal accesses through the relay terminal. If the relay state information of the relay terminal indicates operating in the single-hop relay state, and the remote terminal or the target terminal supports operating in the multi-hop relay state, if the terminal that only supports multi-hop relay cannot access the single-hop relay, the remote terminal or the target terminal cannot use the relay terminal for access. Conversely, the terminal that supports multi-hop relay can access the single-hop relay, the remote terminal or the target terminal can use the relay terminal for access.

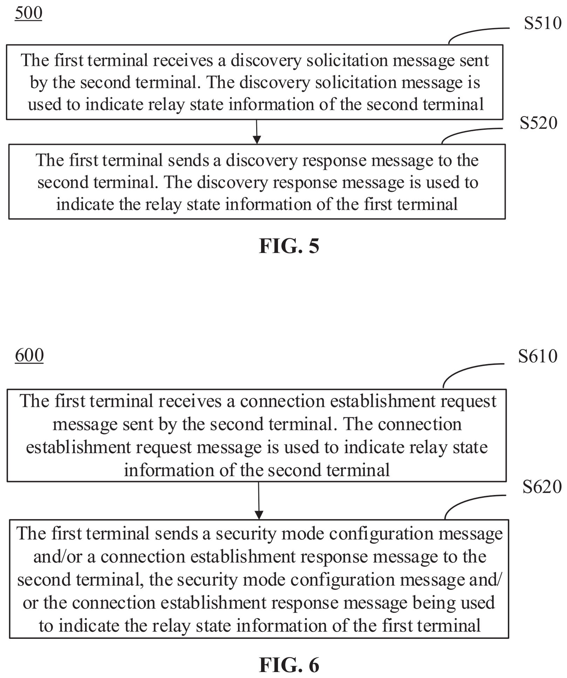

FIG. 5 is a schematic flowchart of a method for relay communication 500 according to another embodiment of the present disclosure. The method may include one or more of the features of the method described above. In an implementation, as illustrated in FIG. 5, the method further includes S510.

In S510, the first terminal receives a discovery solicitation message sent by the second terminal. The discovery solicitation message is used to indicate relay state information of the second terminal.

For example, the second terminal indicates relay state information supported by the second terminal by sending the discovery solicitation message. After receiving the discovery solicitation message, the first terminal may determine whether the second terminal can access through the first terminal based on the relay state information of the second terminal.

For example, the discovery solicitation message may indicate that the second terminal, such as the remote terminal or the target terminal, supports operating in the multi-hop relay state. If the first terminal, such as the relay terminal, is operating in the multi-hop relay state, the first terminal may determine that the second terminal can access through the first terminal. If the first terminal, such as the relay terminal, is operating in the single-hop relay state, and if a terminal that only supports multi-hop relay cannot access the single-hop relay, the first terminal may determine that the second terminal cannot access through the first terminal; if the terminal supporting the multi-hop relay can access the single-hop relay, the first terminal may determine that the second terminal can access through the first terminal.

For example, the discovery solicitation message may indicate that the second terminal, such as the remote terminal or the target terminal, supports operating in the single-hop relay state. If the first terminal, such as the relay terminal, is operating in the single-hop relay state, the first terminal may determine that the second terminal can access through the first terminal. If the first terminal, such as the relay terminal, is operating in the multi-hop relay state, the first terminal may determine that the second terminal cannot access through the first terminal.

In an implementation, as illustrated in FIG. 5, the discovery message includes a discovery response message, and in the S310, the operation that the first terminal sends the first information includes S520.

In S520, the first terminal sends the discovery response message to a second terminal. The discovery response message is used to indicate the relay state information of the first terminal.

For example, the discovery response message sent by the first terminal to the second terminal indicates relay state information of the first terminal, i.e., the relay terminal. The second terminal, such as the remote terminal or the target terminal, can determine whether the second terminal can access through the relay terminal according to the relay state information of the relay terminal. If the first terminal is operating in the multi-hop relay state and the second terminal also supports operating in the multi-hop relay state, the second terminal may access a communication system, such as a sidelink communication system or an uplink/downlink communication system, through the first terminal as a relay. If the first terminal is operating in the multi-hop relay state, but the second terminal only supports operating in the single-hop relay state, the second terminal cannot access the communication system through the first terminal as the relay.

FIG. 6 is a schematic flowchart of a method for relay communication 600 according to another embodiment of the present disclosure. The method may include one or more of the features of the method described above. In an implementation, the first message includes a PC5-signaling (PCS-S) message.

In an implementation, as illustrated in FIG. 6, the method further includes S610.

In S610, the first terminal receives a connection establishment request message sent by the second terminal. The connection establishment request message is used to indicate relay state information of the second terminal.

In an implementation, the connection establishment request message is a ProSe direct link establishment request message. For example, the connection establishment request message sent by the second terminal to the first terminal may be a direct communication request (DCR) message, such as the ProSe direct link establishment request message. The first terminal receiving the ProSe direct link establishment request message may determine whether the second terminal can access the communication system through the first terminal according to the relay type supported by the second terminal.

For example, if the ProSe direct link establishment request message indicates that the relay state information of the second terminal includes supporting operating in the multi-hop relay state, when the first terminal is currently operating in the single-hop relay state, and if the terminal that only supports multi-hop relay cannot access the single-hop relay, the second terminal does not select the first terminal as the relay of the second terminal. If the terminal that only supports the multi-hop relay can access the single-hop relay, the second terminal may select the first terminal as the relay of the second terminal. When the first terminal is currently operating in the multi-hop relay state, the second terminal may select the first terminal as the relay of the second terminal.

For example, if the ProSe direct link establishment request message indicates that the relay state information of the second terminal includes supporting operating in the single-hop relay state, and when the first terminal is currently operating in the single-hop relay state, the second terminal selects the first terminal as the relay of the second terminal; when the first terminal is currently operating in the multi-hop relay state, the second terminal does not select the first terminal as the relay of the second terminal.

In an implementation, the PC5 signaling message includes a security mode configuration message and/or a connection establishment response message, and in the S310, the operation that the first terminal sends the first information includes S620.

In S620, the first terminal sends the security mode configuration message and/or the connection establishment response message to the second terminal, the security mode configuration message and/or the connection establishment response message being used to indicate the relay state information of the first terminal.

In an implementation, the security mode configuration message is a ProSe direct link security mode command message. For example, the security mode configuration message sent by the first terminal to the second terminal may include a Security Mode Command (SMC) message. The second terminal having received the SMC message may select whether to access the communication system through the first terminal according to the relay type supported by the second terminal.

For example, if the ProSe direct link security mode command message indicates that the relay state information of the first terminal indicates operating in the multi-hop relay state, and when the second terminal does not support operating in the multi-hop relay state, the second terminal may not select the first terminal as the relay of the second terminal; when the second terminal supports operating in the multi-hop relay state, the second terminal may select the first terminal as the relay of the second terminal.

For another example, if the ProSe direct link security mode command message indicates that the relay state information of the first terminal indicates operating in the single-hop relay state, and when the second terminal supports operating in the single-hop relay state, the second terminal selects the first terminal as the relay of the second terminal; when the second terminal supports operating in the multi-hop relay state, if the terminal supporting only the multi-hop relay cannot access the single-hop relay, the second terminal does not select the first terminal as the relay of the second terminal; if the terminal supporting the multi-hop relay can access the single-hop relay, the second terminal may select the first terminal as the relay of the second terminal.

In an implementation, the connection establishment response message is a ProSe direct link establishment accept message. For example, the connection establishment response message sent by the first terminal to the second terminal may include a Direct Communication Accept (DCA) message. Specifically, for example, the DCA message may be the ProSe direct link establishment accept message. The ProSe direct link establishment accept message sent by the first terminal to the second terminal may be used to indicate relay state information of the first terminal. The second terminal receiving the ProSe direct link establishment accept message may select whether to access the communication system through the first terminal according to the relay type supported by the second terminal.

For example, if the ProSe direct link establishment accept message indicates that the relay state information of the first terminal indicates operating in the multi-hop relay state, and when the second terminal does not support operating in the multi-hop relay state, the second terminal may not select the first terminal as the relay of the second terminal; when the second terminal supports operating in the multi-hop relay state, the second terminal selects the first terminal as the relay of the second terminal.

For another example, if the ProSe direct link establishment accept message indicates that the relay state information of the first terminal indicates operating in the single-hop relay state, and when the second terminal supports operating in the single-hop relay state, the second terminal selects the first terminal as the relay of the second terminal; when the second terminal supports operating in the multi-hop relay state, if the terminal supporting only the multi-hop relay cannot access the single-hop relay, the second terminal does not select the first terminal as the relay of the second terminal; if the terminal supporting the multi-hop relay can access the single-hop relay, the second terminal may select the first terminal as the relay of the second terminal.

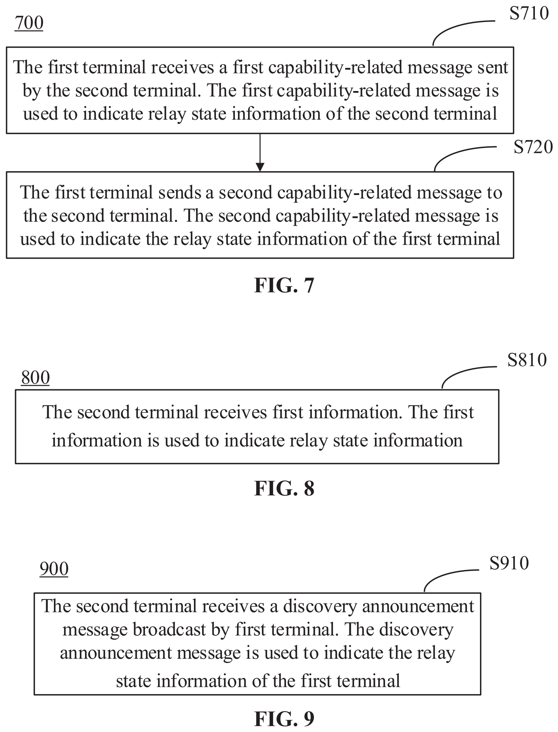

FIG. 7 is a schematic flowchart of a method for relay communication 700 according to another embodiment of the present disclosure. The method may include one or more of the features of the method described above. In an implementation, the first message includes a PC5 Radio Resource Control (RRC) layer message.

In an implementation, the PC5 RRC layer message includes a capability-related message, and the method further includes S710.

In S710, the first terminal receives a first capability-related message sent by the second terminal. The first capability-related message is used to indicate relay state information of the second terminal.

For example, after the second terminal sends the first capability-related message to the first terminal, the first terminal receiving the first capability-related message may determine whether the second terminal can access the communication system through the first terminal according to the relay type supported by the second terminal.

For example, if the first capability-related message indicates that the relay state information of the second terminal indicates operating in the multi-hop relay state, when the first terminal is currently operating in the single-hop relay state, and if the terminal that only supports multi-hop relay cannot access the single-hop relay, the first terminal may determine that the first terminal is not used as the relay of the second terminal. If the terminal supporting the multi-hop relay can access the single-hop relay, the first terminal may determine that the first terminal is used as the relay of the second terminal. When the first terminal is currently operating in the multi-hop relay state, the first terminal determines that the first terminal may be used as the relay of the second terminal.

For example, if the first capability-related message indicates that the relay state information of the second terminal indicates operating in the single-hop relay state, and when the first terminal is currently operating in the single-hop relay state, the first terminal may determine that the first terminal is used as the relay of the second terminal; when the first terminal is currently operating in the multi-hop relay state, the first terminal determines that the first terminal is not used as the relay of the second terminal.

In an implementation, as illustrated in FIG. 7, in the S310, the operation that the first terminal sends the first information includes S720.

In S720, the first terminal sends a second capability-related message to the second terminal. The second capability-related message is used to indicate the relay state information of the first terminal.

For example, after the first terminal sends the second capability-related message to the second terminal, the second terminal receiving the second capability-related message may determine whether the second terminal accesses the communication system through the first terminal according to the relay type supported by the second terminal.

For example, if the second capability-related message indicates that the relay state information of the first terminal indicates operating in the multi-hop relay state, and when the second terminal does not support operating in the multi-hop relay state, the second terminal does not select the first terminal as the relay of the second terminal; when the second terminal supports operating in the multi-hop relay state, the second terminal selects the first terminal as the relay of the second terminal.

For another example, if the second capability-related message indicates that the relay state information of the first terminal indicates operating in the single-hop relay state, and when the second terminal supports operating in the single-hop relay state, the second terminal selects the first terminal as the relay of the second terminal; when the second terminal supports operating in the multi-hop relay state, if the terminal supporting only the multi-hop relay cannot access the single-hop relay, the second terminal does not select the first terminal as the relay of the second terminal; if the terminal supporting the multi-hop relay can access the single-hop relay, the second terminal may select the first terminal as the relay of the second terminal.

FIG. 8 is a schematic flowchart of a method for relay communication according to an embodiment of the present disclosure. Optionally, the method 800 may be applied to the system illustrated in FIG. 1, but is not limited thereto. The method includes at least some of the following.

In S810, the second terminal receives first information. The first information is used to indicate relay state information.

In an implementation, the first information is carried in a first message.

In an implementation, the first information is indicated by one or more indication bits in the first message.

In an implementation, the first information is at least one of the following in the first message:
Layer-2 identifier (Layer-2 ID);
Relay Service Code (RSC);
service identifier; or
a physical layer parameter.

In an implementation, the physical layer parameter includes at least one of a relay service reference signal sequence or a reference signal cyclic shift.

In an implementation, the relay state information is used to indicate at least one of the following:
operating in a single-hop relay state;
operating in a multi-hop relay state; or
a current hop number in operation.

In an implementation, the first message includes a discovery message.

FIG. 9 is a schematic flowchart of a method for relay communication 900 according to another embodiment of the present disclosure. The method may include one or more of the features of the method described above. In an implementation, the discovery message includes a discovery announcement message, and in the S810, the operation that the second terminal receives the first information includes S910.

In S910, the second terminal receives the discovery announcement message broadcast by first terminal. The discovery announcement message is used to indicate the relay state information of the first terminal.

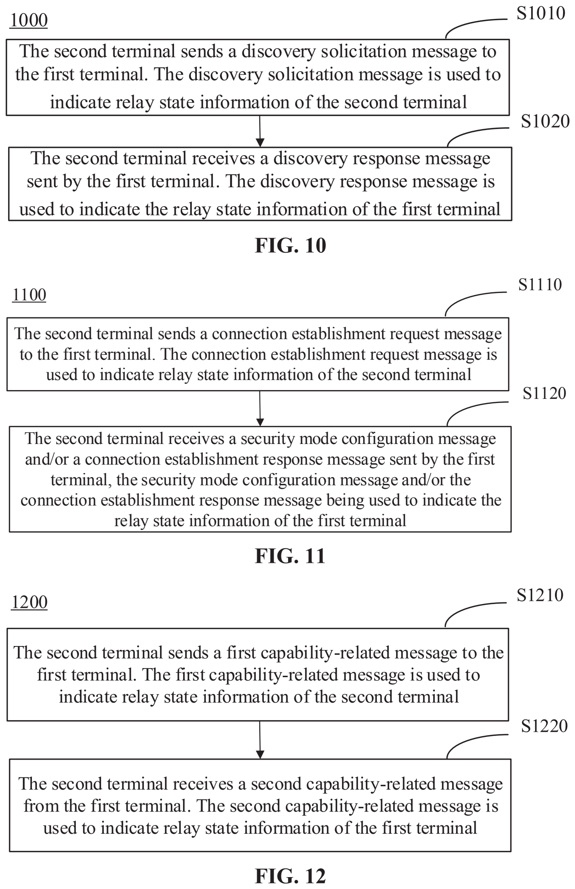

FIG. 10 is a schematic flowchart of a method for relay communication 1000 according to another embodiment of the present disclosure. The method may include one or more of the features of the method described above. In an implementation, the method further includes S1010.

In S1010, the second terminal sends a discovery solicitation message to the first terminal. The discovery solicitation message is used to indicate relay state information of the second terminal.

In an implementation, as illustrated in FIG. 10, the discovery message includes a discovery response message, and in the S810, the operation that the second terminal receives the first information includes S1020.

In S1020, the second terminal receives the discovery response message sent by the first terminal. The discovery response message is used to indicate the relay state information of the first terminal.

FIG. 11 is a schematic flowchart of a method for relay communication 1100 according to another embodiment of the present disclosure. The method may include one or more of the features of the method described above. In an implementation, the first message includes a PC5-signaling (PCS-S) message.

In an implementation, as illustrated in FIG. 11, the method further includes S1110.

In S1110, the second terminal sends a connection establishment request message to the first terminal. The connection establishment request message is used to indicate relay state information of the second terminal.

In an implementation, the connection establishment request message is a ProSe direct link establishment request message.

In an implementation, the PC5 signaling message includes a security mode configuration message and/or a connection establishment response message, and in the S810, the operation that the second terminal receives the first information includes S1120.

In S1120, the second terminal receives the security mode configuration message and/or the connection establishment response message sent by the first terminal, the security mode configuration message and/or the connection establishment response message being used to indicate the relay state information of the first terminal.

In an implementation, the security mode configuration message is a ProSe direct link security mode command message, and/or the connection establishment response message is a ProSe direct link establishment accept message.

FIG. 12 is a schematic flowchart of a method for relay communication 1200 according to another embodiment of the present disclosure. The method may include one or more of the features of the method described above. In an implementation, the first message includes a PC5 Radio Resource Control (RRC) layer message.

In an implementation, the PC5 RRC layer message includes a capability-related message, and the method further includes S1210.

In S1210, the second terminal sends a first capability-related message to the first terminal. The first capability-related message is used to indicate relay state information of the second terminal.

In an implementation, as illustrated in FIG. 12, in the S810, the operation that the second terminal receives the first information includes S1220.

In S1220, the second terminal receives a second capability-related message from the first terminal. The second capability-related message is used to indicate relay state information of the first terminal.

In an implementation, the first terminal is a relay terminal.

In an implementation, the second terminal is a remote terminal or a target terminal.

For specific examples in which the second terminal performs the methods 800 to 1200 for relay communication of the embodiments in the present disclosure, reference can be made to the related description of the second terminal in the above-described embodiments in which the first terminal performs the methods 300 to 700 for relay communication, which will not be repeated here for the sake of brevity.

The embodiments of the present disclosure may be used in a multi-hop terminal-to-terminal relay scenario. In order to prevent a traditional UE that only supports single-hop relay from being connected to the multi-hop relay, the embodiments of the present disclosure can provide a specific signaling interaction process, and the following are several specific examples.

### Example 1: indication through a discovery message

In the example, the manner to indicate different types of relays (including but not limited to single-hop, multi-hop) by the discovery message may include at least one of the following:
1. Explicit indication: the above indication is explicitly conveyed by signaling.
2. Implicit indication: indicated by at least one of the following information of itself:
   a) Layer-2 ID: different identifiers are reserved for different access control manners, and distinguished by Layer-2 ID. For example, an odd-numbered Layer-2 ID indicates single-hop relay, while an even-numbered Layer-2 ID indicates multi-hop relay.
   b) RSC and service ID: different RSC and/or service ID are reserved for different access control manners, and distinguished by the RSC and/or service ID. For example, the first numerical range of RSC and/or service ID indicates single-hop relay, while the second numerical range indicates multi-hop relay.
   c) Physical layer parameters (such as Reference Signal (RS) sequence, RS cyclic shift): different physical layer parameters are reserved for different access control manners and distinguished by physical layer parameters. For example, among the 128 reference signal sequences, the first 64 reference signal sequences correspond to the single-hop, and the last 64 reference signal sequences correspond to the multi-hop.

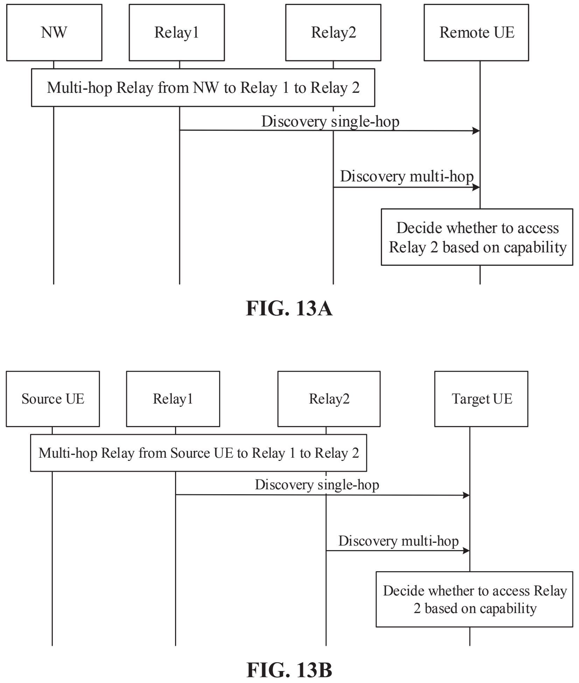

As illustrated in FIG. 13A, the flow indicated by discovery includes the following cases (only case 1 is illustrated).

Case 1: discovery model-A, where the relay UE (e.g. Relay 1 or Relay 2) indicates a relay capability supported by the relay UE by broadcasting a discovery announcement message. For example, in a multi-hop relay scenario from the network to Relay 1 to Relay 2, the discovery message sent by Relay 1 to the remote UE indicates that Relay 1 is operating in a single-hop relay mode, while the discovery message sent by Relay 2 to the remote UE indicates that Relay 2 is operating in the multi-hop relay state. The remote UE then determines whether to access Relay 2 based on capabilities.

Case 2: discovery model-B, including:
a) the remote UE indicates relay capabilities supported by the remote UE by sending a discovery solicitation message, thereby facilitating the relay UE to determine whether the remote UE can access through the relay UE, and/or
b) the relay UE indicates relay capabilities supported by the relay UE by sending a discovery response message, thereby facilitating the remote UE to determine whether the remote UE can access through the relay UE.

Specifically, the content indicated in the above messages exchanged between the relay UE and/or remote UE may include:
1. the relay UE may indicate whether it supports access from single-hop remote UE and/or whether it supports access from multi-hop relay UE;
2. the remote UE may indicate whether it supports accessing multi-hop relay UE.

In this example, "multi-hop" refers to more than one hop.

FIG. 13A illustrates a scenario of network relay (relay between a network and a terminal). As illustrated in FIG. 13B, in a device relay scenario (relay between terminals), the process is similar.

### Example 2: indication through PCS-S message

In the example, the manner to indicate different types of relays (including but not limited to single-hop, multi-hop) by the PCS-S message may include at least one of the following:
1. Explicit indication: the above indication is explicitly conveyed by PCS-S signaling.
2. Implicit indication: indicated by at least one of the following information of itself:
   a) Layer-2 ID: different identifiers are reserved for different access control manners, and distinguished by Layer-2 ID.
   b) service ID: different service ID are reserved for different access control manners, and distinguished by the service ID.
   c) Physical layer parameters (such as RS sequence, RS cyclic shift): different physical layer parameters are reserved for different access control manners and distinguished by physical layer parameters.

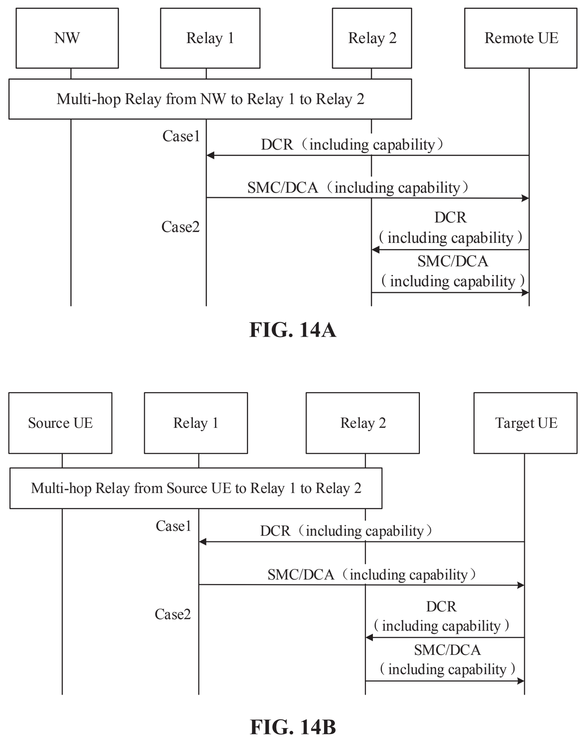

As illustrated in FIG. 14A, the flow indicated by PCS-S includes:
1. the remote UE indicates relay capabilities supported by the remote UE by sending a DCR message, thereby facilitating the relay UE to determine whether the remote UE can access through the relay UE, and/or
2. the relay UE indicates relay capabilities supported by the relay UE by sending an SMC and/or DCA message, thereby facilitating the remote UE to determine whether the remote UE can access through the relay UE.

Specifically, the content indicated in the above messages exchanged between the relay UE and/or remote UE may include:
1. the relay UE may indicate whether it supports access from traditional single-hop remote UE and/or whether it supports access from multi-hop relay UE;
2. the remote UE may indicate whether it supports accessing multi-hop relay UE.

In this example, "multi-hop" refers to more than one hop.

FIG. 14A illustrates a scenario of network relay (relay between a network and a terminal). As illustrated in FIG. 14B, in a device relay scenario (relay between terminals), the process is similar.

### Example 3: indication through PCS-RRC message

In the example, the manner to indicate different types of relays (including but not limited to single-hop, multi-hop) by the PC5-RRC message may include at least one of the following:
1. Explicit indication: the above indication is explicitly conveyed by PC5-RRC signaling.
2. Implicit indication: indicated by at least one of the following information of itself:
   a) Layer-2 ID: different identifiers are reserved for different access control manners, and distinguished by Layer-2 ID.
   b) Physical layer parameters (such as RS sequence, RS cyclic shift): different physical layer parameters are reserved for different access control manners and distinguished by physical layer parameters.

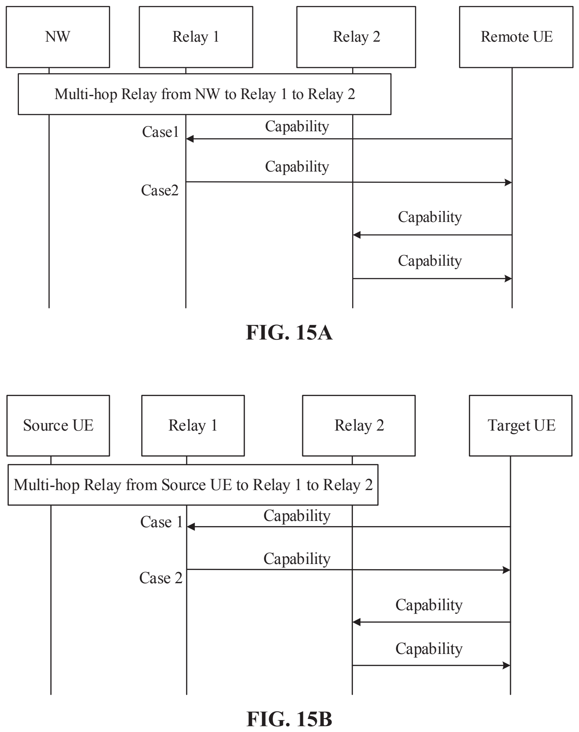

As illustrated in FIG. 15A, the flow indicated by PCS-RRC includes:
1. the remote UE indicates relay capabilities supported by the remote UE by sending a capability-related message, thereby facilitating the relay UE to determine whether the remote UE can access through the relay UE, and/or
2. the relay UE indicates relay capabilities supported by the relay UE by sending an capability-related message, thereby facilitating the remote UE to determine whether the remote UE can access through the relay UE.

Specifically, the content indicated in the above messages exchanged between the relay UE and/or remote UE may include:
1. the relay UE may indicate whether it supports access from traditional single-hop remote UE and/or whether it supports access from multi-hop remote UE;
2. the remote UE may indicate whether it supports accessing multi-hop relay UE.

In this example, "multi-hop" refers to more than one hop.

FIG. 15A illustrates a scenario of network relay (relay between a network and a terminal). As illustrated in FIG. 15B, in a device relay scenario (relay between terminals), the process is similar.

According to the solution of the embodiments of the present disclosure, in the relay scenario, according to the specific signaling interaction flow in the above example, an appropriate relay terminal can be selected to access the network according to the relay type supported by the relay terminal, the remote terminal, the target terminal, and the like, thereby solving the backward compatibility problem. For example, UE that only supports single-hop relay is prevented from connecting to multi-hop relay UE.

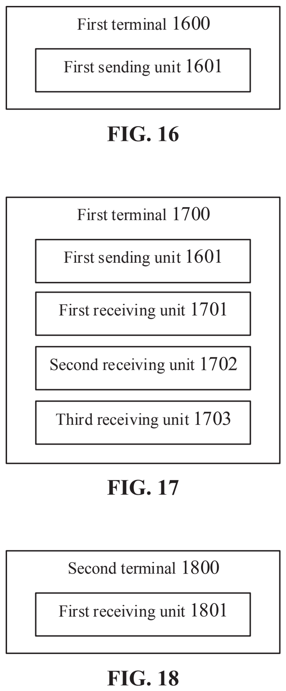

FIG. 16 is a schematic block diagram of a first terminal 1600 according to an embodiment of the present disclosure. The first terminal 1600 may include a first sending unit 1601.

The first sending unit 1601 is configured to send first information. The first information is used to indicate relay state information.

In an implementation, the first information is carried in a first message.

In an implementation, the first information is indicated by one or more indication bits in the first message.

In an implementation, the first information is at least one of the following in the first message:
Layer-2 identifier (Layer-2 ID);
Relay Service Code (RSC);
service identifier; or
a physical layer parameter.

In an implementation, the physical layer parameter includes at least one of a relay service reference signal sequence or a reference signal cyclic shift.

In an implementation, the relay state information is used to indicate at least one of the following:
operating in a single-hop relay state;
operating in a multi-hop relay state; or
a current hop number in operation.

In an implementation, the first message includes a discovery message.

FIG. 17 is a schematic block diagram of a first terminal 1700 according to another embodiment of the present disclosure. The first terminal may include one or more of the features described above of the first terminal. In an implementation, the discovery message includes a discovery announcement message, and the first sending unit 1601 is further configured to broadcast the discovery announcement message to a second terminal. The discovery announcement message is used to indicate the relay state information of the first terminal.

In an implementation, as illustrated in FIG. 17, the first terminal 1700 further includes a first receiving unit 1701.

The first receiving unit 1701 is configured to receive a discovery solicitation message sent by the second terminal. The discovery solicitation message is used to indicate relay state information of the second terminal.

In an implementation, as illustrated in FIG. 17, the discovery message includes a discovery response message, and the first sending unit 1601 is further configured to send the discovery response message to the second terminal. The discovery response message is used to indicate the relay state information of the first terminal.

In an implementation, as illustrated in FIG. 17, the first message includes a PCS-signaling (PCS-S) message.

In an implementation, as illustrated in FIG. 17, the first terminal 1700 further includes a second receiving unit 1702.

The second receiving unit 1702 is configured to receive a connection establishment request message sent by the second terminal. The connection establishment request message is used to indicate relay state information of the second terminal.

In an implementation, the connection establishment request message is a ProSe direct link establishment request message.

In an implementation, the PC5 signaling message includes a security mode configuration message and/or a connection establishment response message, and the first sending unit 1601 is further configured to send the security mode configuration message and/or the connection establishment response message to a second terminal, the security mode configuration message and/or the connection establishment response message being used to indicate the relay state information of the first terminal.

In an implementation, the security mode configuration message is a Proximity based Service (ProSe) direct link security mode command message, and/or the connection establishment response message is a ProSe direct link establishment accept message.

In an implementation, the first message includes a PC5 Radio Resource Control (RRC) layer message.

In an implementation, as illustrated in FIG. 17, the PC5 RRC layer message includes a capability-related message, and the first terminal further includes a third receiving unit 1703.

The third receiving unit 1703 is configured to receive a first capability-related message sent by a second terminal,. The first capability-related message is used to indicate relay state information of the second terminal.

In an implementation, the first sending unit is further configured to send a second capability-related message to the second terminal. The second capability-related message is used to indicate the relay state information of the first terminal.

In an implementation, the second terminal is a remote terminal or a target terminal.

In an implementation, the first terminal is a relay terminal.

FIG. 18 is a schematic block diagram of a second terminal 1800 according to an embodiment of the present disclosure. The second terminal 1800 may include a first receiving unit 1801.

The first receiving unit 1801 is configured to receive first information. The first information is used to indicate relay state information.

In an implementation, the first information is carried in a first message.

In an implementation, the first information is indicated by one or more indication bits in the first message.

In an implementation, the first information is at least one of the following in the first message:
Layer-2 identifier (Layer-2 ID);
Relay Service Code (RSC);
service identifier; or
a physical layer parameter.

In an implementation, the physical layer parameter includes at least one of a relay service reference signal sequence or a reference signal cyclic shift.

In an implementation, the relay state information is used to indicate at least one of the following:
operating in a single-hop relay state;
operating in a multi-hop relay state; or
a current hop number in operation.

In an implementation, the first message includes a discovery message.

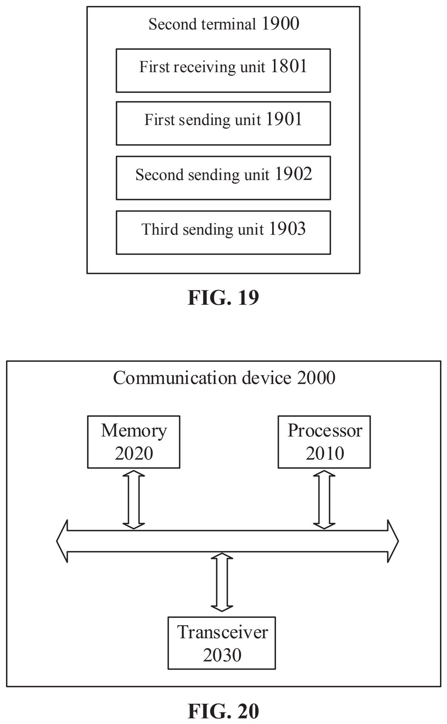

FIG. 19 is a schematic block diagram of a second terminal 1900 according to another embodiment of the present disclosure. The second terminal may include one or more of the features described above of the terminal. In an implementation, the discovery message includes a discovery announcement message, and the first receiving unit 1801 is further configured to receive the discovery announcement message broadcast by a first terminal. The discovery announcement message is used to indicate the relay state information of the first terminal.

In an implementation, the discovery message includes a discovery response message, and the first receiving unit 1801 is further configured to receive the discovery response message sent by the first terminal. The discovery response message is used to indicate the relay state information of the first terminal.

FIG. 19 is a schematic block diagram of a second terminal 1900 according to another embodiment of the present disclosure. The second terminal may include one or more of the features described above of the second terminal. In an implementation, the second terminal 1900 further includes a first sending unit 1901.

The first sending unit 1901 is configured to send a discovery solicitation message to the first terminal. The discovery solicitation message is used to indicate relay state information of the second terminal.

In an implementation, as illustrated in FIG. 19, the discovery message includes a discovery response message, and the first receiving unit 1801 is further configured to receive the discovery response message sent by the first terminal. The discovery response message is used to indicate the relay state information of the first terminal.

In an implementation, the first message includes a PC5-signaling (PCS-S) message.

In an implementation, as illustrated in FIG. 19, the second terminal 1900 further includes a second sending unit 1902.

The second sending unit 1902 is configured to send a connection establishment request message to the first terminal. The connection establishment request message is used to indicate relay state information of the second terminal.

In an implementation, the connection establishment request message is a ProSe direct link establishment request message.

In an implementation, the PC5 signaling message includes a security mode configuration message and/or a connection establishment response message, and the first receiving unit 1801 is further configured to receive the security mode configuration message and/or the connection establishment response message sent by a first terminal, the security mode configuration message and/or the connection establishment response message being used to indicate the relay state information of the first terminal.

In an implementation, the security mode configuration message is a Proximity based Service (ProSe) direct link security mode command message, and/or the connection establishment response message is a ProSe direct link establishment accept message.

In an implementation, the first message includes a PC5 Radio Resource Control (RRC) layer message.

In an implementation, as illustrated in FIG. 19, the PC5 RRC layer message includes a capability-related message, and the second terminal 1900 further includes a third sending unit 1903.

The third sending unit 1903 is configured to send a first capability-related message to a first terminal. The first capability-related message is used to indicate relay state information of the second terminal.

In an implementation, the first receiving unit is further configured to receive a second capability-related message sent by the first terminal. The second capability-related message is used to indicate the relay state information of the first terminal.

In an implementation, the first terminal is a relay terminal.

In an implementation, the second terminal is a remote terminal or a target terminal.

The second terminals 1800 and 1900 of the embodiments of the present disclosure can realize the corresponding functions of the second terminal in the above-described method embodiments. The processes, functions, implementation modes, and beneficial effects corresponding to each module (sub-module, unit, component, etc.) in the second terminal can refer to the corresponding description in the above-described method embodiments, and will not be repeatedly described herein. It is necessary to explain that, the functions described with respect to each module (sub-module, unit, component, etc.) in the second terminal of the embodiments of the present disclosure can be realized by different modules (sub-modules, units or components, etc.) or by the same module (sub-module, unit or component, etc.).

FIG. 20 is a schematic structural diagram of a communication device 2000 according to an embodiment of the present disclosure. The communication device 2000 includes a processor 2010 that may call and run a computer program from a memory to cause the communication device 2000 implement the method in the embodiments of the present disclosure.

In an implementation, the communication device 2000 may also include a memory 2020. The processor 2010 may call and run a computer program from the memory 2020 to cause the communication device 2000 implement the method in the embodiments of the present disclosure.

The memory 2020 may be a separate device independent of the processor 2010 or may be integrated in the processor 2010.

In an implementation, the communication device 2000 may also include a transceiver 2030. The processor 2010 may control the transceiver 2030 to communicate with other devices, and in particular to send information or data to other devices, or receive information or data sent by other devices.

The transceiver 2030 may include a transmitter and a receiver. The transceiver 2030 may further include antennas. The number of antennas may be one or more.

In an implementation, the communication device 2000 may be a first terminal of the embodiments of the present disclosure, and the communication device 2000 may implement corresponding processes implemented by the first terminal in the respective methods of the embodiments of the present disclosure, which will not be repeated here for the sake of brevity.

In an implementation, the communication device 2000 may be a second terminal of the embodiments of the present disclosure, and the communication device 2000 may implement corresponding processes implemented by the second terminal in the respective methods of the embodiments of the present disclosure, which will not be repeated here for the sake of brevity.

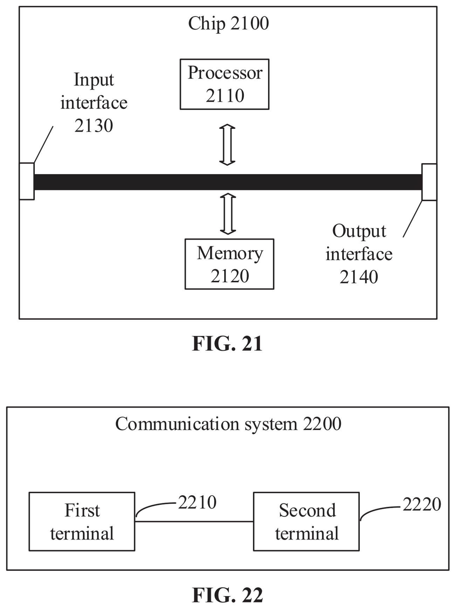

FIG. 21 is a schematic structural diagram of a chip 2100 according to an embodiment of the present disclosure. The chip 2100 includes a processor 2110, which may call and run a computer program from a memory to implement the method in the embodiments of the present disclosure.

In an implementation, the chip 2100 may also include a memory 2120. The processor 2110 may call and run a computer program from the memory 2120 to implement the method executed by the first terminal or the second terminal in the embodiments of the present disclosure.

The memory 2120 may be a separate device independent of the processor 2110 or may be integrated in the processor 2110.

In an implementation, the chip 2100 may also include an input interface 2130. The processor 2110 may control the input interface 2130 to communicate with other devices or chips, and in particular to obtain information or data sent by other devices or chips.

In an implementation, the chip 2100 may also include an output interface 2140. The processor 2110 may control the output interface 2140 to communicate with other devices or chips, and in particular to output information or data to other devices or chips.

In an implementation, the chip may applied to be a first terminal of the embodiments of the present disclosure, and the chip may implement corresponding processes implemented by the first terminal in various methods of the embodiments of the present disclosure, which will not be repeated here for the sake of brevity.

In an implementation, the chip may applied to be a second terminal of the embodiments of the present disclosure, and the chip may implement corresponding processes implemented by the second terminal in various methods of the embodiments of the present disclosure, which will not be repeated here for the sake of brevity.

The chips applied to the first terminal and the second terminal may be the same chip or different chips.

It is to be understood that the chip mentioned in the embodiments of the present disclosure may also be referred to as a system-level chip, a system chip, a chip system or a system-on-chip or the like.

The processor mentioned above may be a general purpose processor, a digital signal processor (DSP), a field programmable gate array (FPGA), an application specific integrated circuit (ASIC), or other programmable logic devices, transistor logic devices, discrete hardware components, and the like. The general purpose processor mentioned above may be a microprocessor or any conventional processor or the like.

The memory mentioned above may be a volatile memory or a non-volatile memory or may include both a volatile memory and a non-volatile memory. The non-volatile memory may be read-only memory (ROM), programmable ROM (PROM), erasable PROM (EPROM), electrically EPROM (EPROM) or flash memory. The volatile memory may be a random access memory (RAM).

It is to be understood that the memory described above is exemplary but not limiting, for example, the memory in embodiments of the present disclosure may also be static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), direct rambus RAM (DR RAM), etc. That is, the memory in the embodiments of the present disclosure is intended to include, but is not limited to, these memories and any other suitable types of memory.

FIG. 22 is a schematic block diagram of a communication system 2200 according to an embodiment of the present disclosure. The communication system 2200 includes a first terminal 2210 and a second terminal 2220.

The first terminal 2210 is configured to send first information. The first information is used to indicate relay state information.

The second terminal 2220 is configured to receive first information. The first information is used to indicate relay state information.

The first terminal 2210 may be configured to implement corresponding functions implemented by the first terminal in the above method, and the second terminal 2220 may be configured to implement corresponding functions implemented by the second terminal in the above method. For brevity, details are not repeated here.

In the above-described embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the flow or function described in accordance with embodiments of the present disclosure is generated in whole or in part. The computer may be a general purpose computer, a special purpose computer, a computer network, or other programmable device. The computer instructions may be stored in a computer-readable storage medium, or from one computer-readable storage medium to another. For example, the computer instructions may be transmitted from a web site, computer, server, or data center to another web site, computer, server, or data center via wired (e.g. coaxial cable, optical fiber, digital subscriber line (DSL)) or wireless (e.g. infrared, wireless, microwave, etc.). The computer-readable storage medium may be any usable medium accessible to a computer or a data storage device containing one or more usable medium integration, such as a server, data center, etc. The usable medium may be a magnetic medium (e.g. floppy disk, hard disk, magnetic tape), optical medium (e.g. DVD), or semiconductor medium (e.g. solid state disk (SSD)), etc.

It is to be understood that in various embodiments of the present disclosure, the size of the sequence number of the above-mentioned processes does not mean the order of execution, and the execution order of each process is to be determined by its function and inherent logic, and should not be limited in any way to the implementation process of the embodiments of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

The above is only the specific implementation of the present disclosure, but the scope of protection of the present disclosure is not limited thereto. Any person skilled in the art can easily think of changes or substitutions within the technical scope disclosed in the application, which is to be covered within the protection scope of the application. Therefore, the scope of protection of the application shall be subject to the scope of protection of the claim.

## Claims

1. A method for relay communication, comprising:
sending, by a first terminal, first information, wherein the first information is used to indicate relay state information.

2. The method of claim 1, wherein the first information is carried in a first message.

3. The method of claim 2, wherein the first information is indicated by one or more indication bits in the first message.

4. The method of claim 2, wherein the first information is at least one of the following in the first message:
Layer-2 identifier (Layer-2 ID);
Relay Service Code (RSC);
service identifier; or
a physical layer parameter.

5. The method of claim 4, wherein the physical layer parameter comprises at least one of a relay service reference signal sequence or a reference signal cyclic shift.

6. The method of any one of claims 2 to 5, wherein the relay state information is used to indicate at least one of the following:
operating in a single-hop relay state;
operating in a multi-hop relay state; or
a current hop number in operation.

7. The method of any one of claims 2 to 6, wherein the first message comprises a discovery message.

8. The method of claim 7, wherein the discovery message comprises a discovery announcement message, and sending, by the first terminal, the first information comprises:
broadcasting, by the first terminal, the discovery announcement message to a second terminal, wherein the discovery announcement message is used to indicate the relay state information of the first terminal.

9. The method of claim 8, wherein the discovery message comprises a discovery response message, and sending, by the first terminal, the first information comprises:
sending, by the first terminal, the discovery response message to the second terminal, wherein the discovery response message is used to indicate the relay state information of the first terminal.

10. The method of claim 9, further comprising:
receiving, by the first terminal, a discovery solicitation message sent by the second terminal, wherein the discovery solicitation message is used to indicate relay state information of the second terminal.

11. The method of any one of claims 2 to 6, wherein the first message comprises a PC5-signaling (PCS-S) message.

12. The method of claim 11, wherein the PC5 signaling message comprises a security mode configuration message and/or a connection establishment response message, and sending, by the first terminal, the first information comprises:
sending, by the first terminal, the security mode configuration message and/or the connection establishment response message to a second terminal, the security mode configuration message and/or the connection establishment response message being used to indicate the relay state information of the first terminal.

13. The method of claim 12, wherein the security mode configuration message is a Proximity based Service (ProSe) direct link security mode command message, and/or the connection establishment response message is a ProSe direct link establishment accept message.

14. The method of claim 12 or 13, further comprising:
receiving, by the first terminal, a connection establishment request message sent by the second terminal, wherein the connection establishment request message is used to indicate relay state information of the second terminal.

15. The method of any one of claims 12 to 14, wherein the connection establishment request message is a ProSe direct link establishment request message.

16. The method of any one of claims 2 to 6, wherein the first message comprises a PC5 Radio Resource Control (RRC) layer message.

17. The method of claim 16, wherein the PC5 RRC layer message comprises a capability-related message, and the method further comprises:
receiving, by the first terminal, a first capability-related message sent by a second terminal, wherein the first capability-related message is used to indicate relay state information of the second terminal.

18. The method of claim 17, wherein sending, by the first terminal, the first information comprises:
sending, by the first terminal, a second capability-related message to the second terminal, wherein the second capability-related message is used to indicate the relay state information of the first terminal.

19. The method of any one of claims 8 to 10, 12 to 15, 17 and 18, wherein the second terminal is a remote terminal or a target terminal.

20. The method of any one of claims 1 to 19, wherein the first terminal is a relay terminal.

21. A relay communication method, comprising:
receiving, by a second terminal, first information, wherein the first information is used to indicate relay state information.

22. The method of claim 21, wherein the first information is carried in a first message.

23. The method of claim 22, wherein the first information is indicated by one or more indication bits in the first message.

24. The method of claim 22, wherein the first information is at least one of the following in the first message:
Layer-2 identifier (Layer-2 ID);
Relay Service Code (RSC);
service identifier; or
a physical layer parameter.

25. The method of claim 24, wherein the physical layer parameter comprises at least one of a relay service reference signal sequence or a reference signal cyclic shift.

26. The method of any one of claims 22 to 25, wherein the relay state information is used to indicate at least one of the following:
operating in a single-hop relay state;
operating in a multi-hop relay state; or
a current hop number in operation.

27. The method of any one of claims 22 to 26, wherein the first message comprises a discovery message.

28. The method of claim 27, wherein the discovery message comprises a discovery announcement message, and receiving, by the second terminal, the first information comprises:
receiving, by the second terminal, the discovery announcement message broadcast by a first terminal, wherein the discovery announcement message is used to indicate the relay state information of the first terminal.

29. The method of claim 28, wherein the discovery message comprises a discovery response message, and receiving, by the second terminal, the first information comprises:
receiving, by the second terminal, the discovery response message sent by the first terminal, wherein the discovery response message is used to indicate the relay state information of the first terminal.

30. The method of claim 29, further comprising:
sending, by the second terminal, a discovery solicitation message to the first terminal, wherein the discovery solicitation message is used to indicate relay state information of the second terminal.

31. The method of any one of claims 22 to 26, wherein the first message comprises a PC5-signaling (PCS-S) message.

32. The method of claim 31, wherein the PC5 signaling message comprises a security mode configuration message and/or a connection establishment response message, and receiving, by the second terminal, the first information comprises:
receiving, by the second terminal, the security mode configuration message and/or the connection establishment response message sent by a first terminal, the security mode configuration message and/or the connection establishment response message being used to indicate the relay state information of the first terminal.

33. The method of claim 32, wherein the security mode configuration message is a Proximity based Service (ProSe) direct link security mode command message, and/or the connection establishment response message is a ProSe direct link establishment accept message.

34. The method of claim 32 or 33, further comprising:
sending, the second terminal, a connection establishment request message to the first terminal, wherein the connection establishment request message is used to indicate relay state information of the second terminal.

35. The method of any one of claims 32 to 34, wherein the connection establishment request message is a ProSe direct link establishment request message.

36. The method of any one of claims 22 to 26, wherein the first message comprises a PC5 Radio Resource Control (RRC) layer message.

37. The method of claim 36, wherein the PC5 RRC layer message comprises a capability-related message, and the method further comprises:
sending, the second terminal, a first capability-related message to a first terminal, wherein the first capability-related message is used to indicate relay state information of the second terminal.

38. The method of claim 37, wherein receiving, by the second terminal, the first information comprises:
receiving, by the second terminal, a second capability-related message sent by the first terminal, wherein the second capability-related message is used to indicate the relay state information of the first terminal.

39. The method of any one of claims 28 to 30, 32 to 35, 37, and 38, wherein the first terminal is a relay terminal.

40. The method of any one of claims 21 to 39, wherein the second terminal is a remote terminal or a target terminal.

41. A first terminal, comprising:
a first sending unit, configured to send first information, wherein the first information is used to indicate relay state information.

42. The first terminal of claim 41, wherein the first information is carried in a first message.

43. The first terminal of claim 42, wherein the first information is indicated by one or more indication bits in the first message.

44. The first terminal of claim 42, wherein the first information is at least one of the following in the first message:
Layer-2 identifier (Layer-2 ID);
Relay Service Code (RSC);
service identifier; or
a physical layer parameter.

45. The first terminal of claim 44, wherein the physical layer parameter comprises at least one of a relay service reference signal sequence or a reference signal cyclic shift.

46. The first terminal of any one of claims 42 to 45, wherein the relay state information is used to indicate at least one of the following:
operating in a single-hop relay state;
operating in a multi-hop relay state; or
a current hop number in operation.

47. The first terminal of any one of claims 42 to 46, wherein the first message comprises a discovery message.

48. The first terminal of claim 47, wherein the discovery message comprises a discovery announcement message, and the first sending unit is further configured to broadcast the discovery announcement message to a second terminal, wherein the discovery announcement message is used to indicate the relay state information of the first terminal.

49. The first terminal of claim 48, wherein the discovery message comprises a discovery response message, and the first sending unit is further configured to send the discovery response message to the second terminal, wherein the discovery response message is used to indicate the relay state information of the first terminal.

50. The first terminal of claim 49, wherein the first terminal further comprises:
a first receiving unit, configured to receive a discovery solicitation message sent by the second terminal, wherein the discovery solicitation message is used to indicate relay state information of the second terminal.

51. The first terminal of any one of claims 42 to 46, wherein the first message comprises a PC5-signaling (PC5-S) message.

52. The first terminal of claim 51, wherein the PC5 signaling message comprises a security mode configuration message and/or a connection establishment response message, and the first sending unit is further configured to send the security mode configuration message and/or the connection establishment response message to a second terminal, the security mode configuration message and/or the connection establishment response message being used to indicate the relay state information of the first terminal.

53. The first terminal of claim 52, wherein the security mode configuration message is a Proximity based Service (ProSe) direct link security mode command message, and/or the connection establishment response message is a ProSe direct link establishment accept message.

54. The first terminal of claim 52 or 53, wherein the first terminal further comprises:
a second receiving unit, configured to receive a connection establishment request message sent by the second terminal, wherein the connection establishment request message is used to indicate relay state information of the second terminal.

55. The first terminal of any one of claims 52 to 54, wherein the connection establishment request message is a ProSe direct link establishment request message.

56. The first terminal of any one of claims 42 to 46, wherein the first message comprises a PC5 Radio Resource Control (RRC) layer message.

57. The first terminal of claim 56, wherein the PC5 RRC layer message comprises a capability-related message, and the first terminal further comprises:
a third receiving unit, configured to receive a first capability-related message sent by a second terminal, wherein the first capability-related message is used to indicate relay state information of the second terminal.

58. The first terminal of claim 57, wherein the first sending unit is further configured to send a second capability-related message to the second terminal, wherein the second capability-related message is used to indicate the relay state information of the first terminal.

59. The first terminal of any one of claims 48 to 50, 52 to 55, 57, and 58, wherein the second terminal is a remote terminal or a target terminal.

60. The first terminal of any one of claims 41 to 59, wherein the first terminal is a relay terminal.

61. A second terminal, comprising:
a first receiving unit, configured to receive first information, wherein the first information is used to indicate relay state information.

62. The second terminal of claim 61, wherein the first information is carried in a first message.

63. The second terminal of claim 62, wherein the first information is indicated by one or more indication bits in the first message.

64. The second terminal of claim 62, wherein the first information is at least one of the following in the first message:
Layer-2 identifier (Layer-2 ID);
Relay Service Code (RSC);
service identifier; or
a physical layer parameter.

65. The second terminal of claim 64, wherein the physical layer parameter comprises at least one of a relay service reference signal sequence or a reference signal cyclic shift.

66. The second terminal of claim 62, wherein the relay state information is used to indicate at least one of the following:
operating in a single-hop relay state;
operating in a multi-hop relay state; or
a current hop number in operation.

67. The second terminal of any one of claims 62 to 66, wherein the first message comprises a discovery message.

68. The second terminal of claim 67, wherein the discovery message comprises a discovery announcement message, and the first receiving unit is further configured to receive the discovery announcement message broadcast by a first terminal, wherein the discovery announcement message is used to indicate the relay state information of the first terminal.

69. The second terminal of claim 68, wherein the discovery message comprises a discovery response message, and the first receiving unit is further configured to receive the discovery response message sent by the first terminal, wherein the discovery response message is used to indicate the relay state information of the first terminal.

70. The second terminal of claim 69, wherein the second terminal further comprises:
a first sending unit, configured to send a discovery solicitation message to the first terminal, wherein the discovery solicitation message is used to indicate relay state information of the second terminal.

71. The second terminal of any one of claims 62 to 66, wherein the first message comprises a PC5-signaling (PCS-S) message.

72. The second terminal of claim 71, wherein the PC5 signaling message comprises a security mode configuration message and/or a connection establishment response message, and the first receiving unit is further configured to receive the security mode configuration message and/or the connection establishment response message sent by a first terminal, the security mode configuration message and/or the connection establishment response message being used to indicate the relay state information of the first terminal.

73. The second terminal of claim 72, wherein the security mode configuration message is a Proximity based Service (ProSe) direct link security mode command message, and/or the connection establishment response message is a ProSe direct link establishment accept message.

74. The second terminal of claim 72 or 73, wherein the second terminal further comprises:
a second sending unit, configured to send a connection establishment request message to the first terminal, wherein the connection establishment request message is used to indicate relay state information of the second terminal.

75. The second terminal of any one of claims 72 to 74, wherein the connection establishment request message is a ProSe direct link establishment request message.

76. The second terminal of any one of claims 62 to 66, wherein the first message comprises a PC5 Radio Resource Control (RRC) layer message.

77. The second terminal of claim 76, wherein the PC5 RRC layer message comprises a capability-related message, and the second terminal further comprises:
a third sending unit, configured to send a first capability-related message to a first terminal, wherein the first capability-related message is used to indicate relay state information of the second terminal.

78. The second terminal of claim 77, wherein the first receiving unit is further configured to receive a second capability-related message sent by the first terminal, wherein the second capability-related message is used to indicate the relay state information of the first terminal.

79. The second terminal of any one of claims 68 to 70, 72 to 75, 77, and 78, wherein the first terminal is a relay terminal.

80. The second terminal of any one of claims 61 to 79, wherein the second terminal is a remote terminal or a target terminal.

81. A terminal device, comprising: a processor and a memory, wherein the memory is configured to store a computer program, and the processor is configured to call and run the computer program stored in the memory to cause the terminal device to implement the method of any one of claims 1 to 20 or any one of claims 21 to 40.

82. A chip, comprising: a processor, configured to call and run a computer program from a memory, to cause a device equipped with the chip to implement the method of any one of claims 1 to 20 or any one of claims 21 to 40.

83. A computer-readable storage medium, having stored thereon a computer program that, when running on a device, causes the device to implement the method of any one of claims 1 to 20 or any one of claims 21 to 40.

84. A computer program product, comprising computer program instructions, wherein the computer program instructions cause a computer to implement the method of any one of claims 1 to 20 or any one of claims 21 to 40.

85. A computer program, wherein the computer program causes a computer to implement the method of any one of claims 1 to 20 or any one of claims 21 to 40.
